# EUROPÄISCHE PATENTSCHRIFT

(11) **EP 1 111 209 B1**
(45) Veröffentlichungstag und Bekanntmachung des Hinweises auf die Patenterteilung: **07.07.2004**
(21) Anmeldenummer: 00127864.7
(22) Anmeldetag: 20.12.2000
(51) Int. Cl.: F01N 3/20, F01N 3/05, F01N 3/28

(54) **Abgasanlage für Kraftfahrzeuge**
Exhaust apparatus for motor vehicles
Dispositif d'échappement pour véhicules automobiles

(30) Priorität: 23.12.1999 DE 19962529
(43) Veröffentlichungstag der Anmeldung: 27.06.2001
(73) Patentinhaber: Faurecia Abgastechnik GmbH, 90765 Fürth (DE)
(72) Erfinder: Unbehaun, Martin, 90409 Nürnberg (DE)
(74) Vertreter: Mörtel & Höfner

(56) Entgegenhaltungen:
- DE-C- 467 513
- GB-A- 1 365 604
- US-A- 3 100 140
- US-A- 3 910 042
- PATENT ABSTRACTS OF JAPAN vol. 009, no. 158 (M-393), 3. Juli 1985 (1985-07-03) & JP 60 032919 A (NIPPON JIDOSHA BUHIN SOGO KENKYUSHO KK;OTHERS: 01), 20. Februar 1985 (1985-02-20)

## Beschreibung

Die Erfindung betrifft eine Abgasanlage für Kraftfahrzeuge mit einem Abgaskonverter und einem diesen vorgeschalteten Abgaskühler. Bei Abgasanlagen mit Abgaskonvertern bzw. Abgaskatalysatoren findet eine ausreichende Umsetzung der Abgasschadstoffe nur dann statt, wenn die katalytisch wirksame Schicht des Konverters bzw. des darin enthaltenen Monolithen eine bestimmte Betriebstemperatur erreicht hat. Während der Kaltstartphase und auch im Niederlastbereich des Motors wird daher ein möglichst schneller und verlustfreier Transport der Abgaswärme zum Konverter angestrebt. Aus diesem Grund werden Abgaskonverter oft möglichst nahe am Motor angeordnet. Andererseits kann es insbesondere im Hochlastbereich durch erhöhte Abgastemperaturen und durch verstärkte Wärmefreisetzung bei der katalytischen Umsetzung zu einer Schädigung des Konverters durch Überhitzung kommen. Es werden deshalb vielfach Maßnahmen zu dessen Kühlung getroffen. In JP60032919A ist ein Abgaskonverter beschrieben, bei dem innerhalb eines Gehäuses ein Monolith angeordnet ist. Durch das Zentrum des Monolithen erstreckt sich ein Kühlrohr, das seitlich aus dem Konvertergehäuse hinausgeführt ist. Das eine Ende des Kühlrohrs ragt aus dem Gehäuse heraus und ist so angeordnet, dass Fahrtluft das Kühlrohr durchströmen kann. Nachteilig ist diese Art der Kühlung bei Konvertern mit Monolithen aus keramischen Materialien, da diese nur schlecht wärmeleitfähig sind, so daß die Wärmeabfuhr aus dem Monolithen und insbesondere aus dessen radial außen liegenden Bereichen nicht sehr effektiv sein dürfte. Um eine Wärmeableitung zu ermöglichen muss der Monolith mit dem Kühlohr in Wärmekontakt stehen, d.h. dieses dicht umfassen. Dabei ergeben sich Probleme aufgrund der sehr unterschiedlichen Wärmeausdehnung eines in aller Regel aus Metall bestehenden Rohres und dem keramischen Monolithen. In GB 1365604, DE2222498, DE4205328 und DE2215507 sind Abgasanlagen beschrieben, bei denen ein sich im Motorraum und daher an einer für Fahrtluft nur unzureichend zugänglichen Stelle angeordneter Abschnitt einer Abgasanlage, etwa ein Abgasrohr oder ein Abgaskonverter, von einem Mantel umgeben ist, in den Fahrtluft eingeleitet wird.

Aufgabe der Erfindung ist es, eine Abgasanlage für Kraftfahrzeuge vorzuschlagen, mit der auf konstruktiv einfache Weise eine effektive Kühlung des Abgases und damit ein zuverlässiger Überhitzungsschutz eines Abgaskonverters gewährleistet ist.

Diese Aufgabe wird durch eine Abgasanlage mit den Merkmalen des Anspruches 1 gelöst. Danach weist der dem Abgaskonverter vorgeschaltete Abgaskühler ein einen Abgaskanal umgrenzendes, mit einer Zuström- und einer Abströmöffnung für das Abgas versehenes Gehäuse mit einer vorzugsweise zylinderförmigen Seitenwand auf, deren im Wesentlichen gesamte Innenfläche eine von Abgas beaufschlagbare Kühlfläche bildet. Innerhalb des Abgaskanals ist wenigstens ein das Gehäuse durchsetzender Kühlluftkanal angeordnet. Während bei den bekannten Kühlvorrichtungen lediglich eine Kühlung der Außenfläche eines Konverters oder eines Abgasrohrabschnittes erfolgt, steht bei der vorgeschlagenen Lösung eine weitere Kühlfläche, nämlich die Außenfläche des den Abgaskanal durchsetzenden Kühlkanals zur Verfügung. Das Abgas wird damit sowohl von außen als auch von innen und dementsprechend effektiver gekühlt. Eine in konstruktiver Hinsicht besonders vorteilhafte Ausgestaltung sieht vor, dass sich der Kühlluftkanal im Wesentlichen in Längsrichtung des Kühlergehäuses bzw. in Strömungsrichtung des Abgases erstreckt. Vorzugsweise ist die Querschnittsfläche des Kühlluftkanals so gewählt, dass die zwischen ihm und der Außenwand verbleibende Querschnittsfläche des Abgaskanals der Querschnittsfläche des vorgeschalteten Abgasrohres entspricht. Dadurch ist verhindert, dass sich im Bereich des Kühlers ein unerwünschter Staudruck aufbaut. Die Effektivität des Kühlers wird noch dadurch erhöht, dass zwischen der den Kühlluftkanal umgrenzenden Wand und der Außenwand ein allseitiger Abstand vorhanden ist. Der Kühlluftkanal kann beispielsweise von dem Lüfterrad des Motorkühlers gespeist sein. Vorzugsweise ist jedoch eine Kühlung mit Fahrtluft vorgesehen, d.h. die Einströmöffnung des Kühlkanals ist so angeordnet, dass sie bei der Fahrt von der Fahrtluft beaufschlagt ist. Vorzugsweise ist die Lufteintrittsöffnung an der der Fahrtluft beaufschlagten vorderen Stirnseite des Gehäuses des Abgaskühlers angeordnet, was auch in fertigungstechnischer Hinsicht vorteilhaft ist. Dementsprechend ist die Luftaustrittöffnung des Kühlluftkanals in der hinteren Stirnseite des genannten Gehäuses angeordnet.

Bei einem weiteren Ausführungsbeispiel sind zur Intensivierung der Abgaskühlung mehrere, z.B. zwei Kühlluftkanäle vorgesehen, die das Gehäuse des Abgaskühlers durchsetzen. Die Lufteintritts- und Luftaustrittsöffnungen der Kühlluftkanäle flankieren dabei jeweils die zentral an einer Stirnseite angeordnete Zuströmöffnung bzw. Abströmöffnung für Abgas. Denkbar ist auch, dass der Kühlluftkanal das Kühlergehäuse mit nur einer Einströmöffnung und einer Ausströmöffnung durchsetzt und sich innerhalb des Gehäuses in zwei oder mehr Teilkanäle verzweigt. Um den Wärmeübergang zwischen Abgas und Kühl- bzw. Umgebungsluft zu erhöhen, ist es zweckmäßig, die beteiligten Wände mit oberflächenvergrößernden Strukturen, etwa mit Rippen oder dergleichen zu versehen. Eine Optimierung des Wärmeaustausches kann auch dadurch erreicht werden, dass die am Wärmeaustausch beteiligten Wände schwarze Oberflächen aufweisen.

Zur Steuerung der Kühlung ist bei einer bevorzugten Ausführungsform vorgesehen, dass der Kühlluftkanal beispielsweise mit einer Klappe verschließbar ist, um die Kühlleistung des Abgaskühlers zu reduzieren, damit der Abgaskonverter möglichst schnell seine Betriebstemperatur erreicht. Eine alternative Steuerung der Kühlung sieht vor, dass von der Eingangsseite des Abgaskühlers ein Bypassrohr abzweigt, dass in den nachgeschalteten Abgaskonverter mündet. Weiterhin ist ein Ventil vorgesehen, das bei Wärmebedarf, etwa bei im Niederlastbereich betriebenem Fahrzeug, den Abgaskanal sperrt und das Bypassrohr öffnet. Im Hochlastbereich dagegen, wenn also die Gefahr einer Überhitzung besteht, nimmt das Ventil eine Schaltstellung ein, bei der das Bypassrohr verschlossen ist und das Abgas durch den Abgaskanal des Kühlers hindurchgeleitet wird.

Die Erfindung wird nun anhand von in den beigefügten Zeichnungen dargestellten Ausführungsbeispielen näher erläutert.
Es zeigen:
- Fig.1: einen Abgaskühler einer Abgasanlage in schematischer Darstellung, der von einem einzigen Kühlluftkanal in Längsrichtung durchsetzt ist,
- Fig.2: einen Querschnitt entsprechend der Linie II-II in Fig.1,
- Fig.3: einen Querschnitt entsprechend der Linie III-III in Fig.1,
- Fig.4: einen Querschnitt entsprechend der Linie IV-IV in Fig.1,
- Fig.5: eine schematische Darstellung eines Abgaskühlers, dessen Gehäuse in Längsrichtung von zwei Kühlluftkanälen durchsetzt ist,
- Fig.6: einen Querschnitt entsprechend der Linie VI-VI in Fig.5,
- Fig.7: einen Querschnitt entsprechend der Linie VII-VII in Fig.5,
- Fig.8: einen Ausschnitt einer Abgasanlage mit einem Abgaskonverter und einem Abgaskühler, welcher zur Steuerung seiner Kühlleistung ein eingangsseitig abzweigendes, zum Konverter führendes und von einem Ventil gesteuertes Bypassrohr aufweist, und
- Fig.9: das Ventil von Fig.8 in einer anderen Schaltstellung.

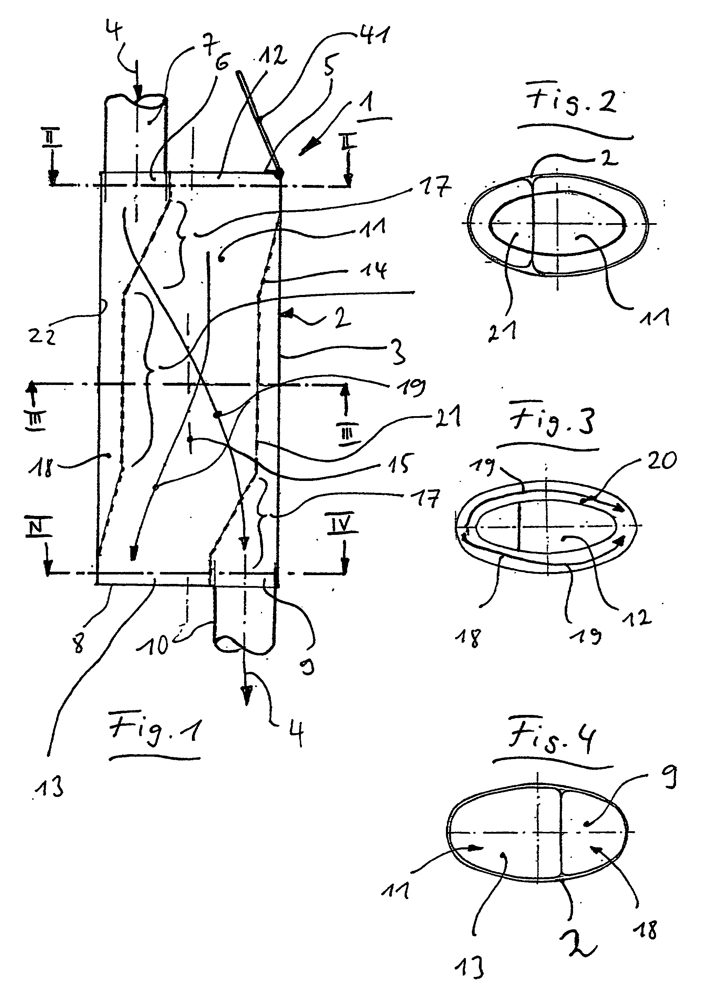

In Fig.1 ist ein Kühler 1 schematisch dargestellt. Er weist ein z.B. aus Stahlblech bestehendes Gehäuse 2 mit einer zylindrischen Seitenwand 3 auf. In der gegen die Strömungsrichtung 4 weisenden Stirnwand 5 des Gehäuses 2 ist eine Zuströmöffnung 6 vorhanden, an die ein Abgasrohr 7 angesetzt ist, das von einer Brennkraftmaschine (nicht dargestellt) ausgestoßenes Abgas in das Innere des Gehäuses 2 leitet. Die gegenüberliegende in Strömungsrichtung 4 weisende hintere Stirnwand 8 weist eine Abströmöffnung 9 und ein damit verbundenes und zu einem Abgaskonverter (in Fig.1 nicht dargestellt) führendes Abgasrohr 10 auf. Das Gehäuse 2 ist im Wesentlichen in Längs- bzw. in Strömungsrichtung 4 von einem Kühlluftkanal 11 durchsetzt. Der Kühlluftkanal 11 mündet einerseits mit einer Lufteinströmöffnung 12 in die Stirnseite 5 und andererseits mit einer Luftausströmöffnung 13 in die hintere Stirnwand 8. Der Kühlluftkanal 11 ist von einer im Wesentlichen rohrförmigen Wand 14 umgrenzt und weist einen mittleren, etwa parallel zur Mittellängsachse 15 des Gehäuses 2 verlaufenden Abschnitt 16 auf. An diesen Abschnitt schließt sich beidseitig jeweils ein schräg verlaufender, zu den Öffnungen 12,13 führender Abschnitt 17 an. Die Zuströmöffnung 6 und die Abströmöffnung 9 sind seitlich versetzt angeordnet, gleiches trifft für die Lufteinströmöffnung 12 und die Luftausströmöffnung 13 des Kühlluftkanals 11 zu. Vorteil dieser Ausgestaltung ist, dass sich der Kühlluftkanal 11 und der im Innenraum des Gehäuses verbleibende und den Kühlluftkanal umfassende Abgaskanal 18 sich überkreuzen. Das Abgas wird dadurch gezwungen, den gesamten Umfang des Kühlluftkanals 11 zu umströmen, was in Fig.1 u.3 durch die Strömungspfeile 19 angedeutet ist. Der Kühlluftkanal 11 ist so bemessen, dass die Querschnittsfläche 20, die er im Abgaskanal 18 freilässt etwa der Querschnittsfläche der Abgasrohre 7,10 entspricht. Dadurch ist verhindert, dass sich im Kühler 1 ein Staudruck aufbaut. Der Vergrößerung der an dem Wärmeaustausch beteiligten Kühlflächen, also der Außenseite 21 der Wand 14 des Kühlluftkanals 11 und der Innenseite 22 des Gehäuses 2 sind aufgrund des in der Regel nur knapp bemessenen Einbauraumes an der Bodengruppe eines Fahrzeuges Grenzen gesetzt. Deshalb kann es zweckmäßig sein, zur Erhöhung der Kühlwirkung oberflächenvergrößernde Strukturen, etwa Noppen oder Rippen an den genannten Kühlflächen vorzusehen und/oder diese Flächen schwarz einzufärben.

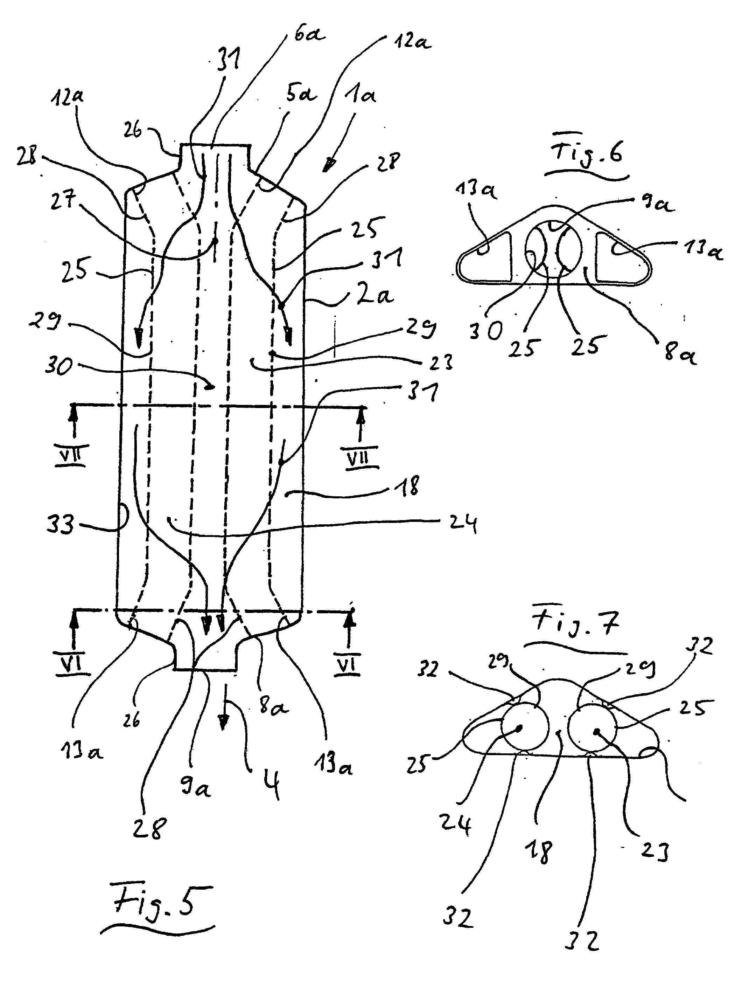

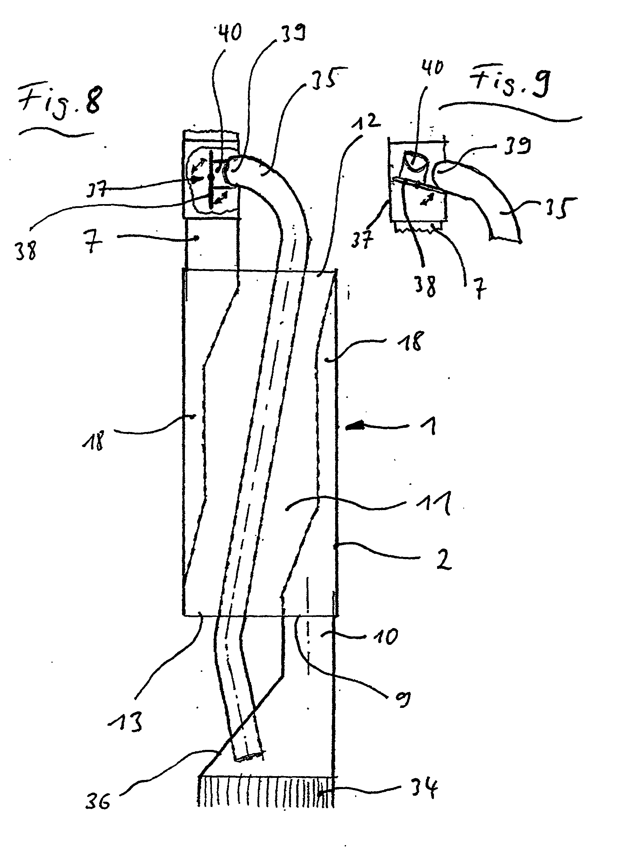

Bei dem in Fig.5 schematisch dargestellten Kühler 1a ist das Gehäuse 2a von zwei von Rohren 25 gebildeten Kühlluftkanälen 23,24 durchsetzt. Das Gehäuse 2a weist in Anpassung an den an einer Fahrzeugbodengruppe vorhandenen Anbauraum eine etwa dreieckige Querschnittsform auf. An die vordere und hintere Stirnwand 5a,8a ist jeweils ein eine Zuströmöffnung 6a bzw. eine Abströmöffnung 9a umgrenzender Anschlussstutzen 26 angeformt. Die genannten Öffnungen 6a und 9a sind koaxial zur Mittellängsachse 27 des Gehäuses 2a angeordnet. Die Kühlluftkanäle 23,24 münden in der vorderen Stirnwand 5a mit Lufteinströmöffnungen 12a, welche die Zuströmöffnung 6a flankieren. Auf der Gegenseite münden die Kühlluftkanäle 23,24 mit Luftausströmöffnungen 13a in der hinteren Stirnwand 8a aus. Die die Kühlluftkanäle 23,24 bildenden Rohre 25 weisen jeweils einen sich an die Stirnseiten 5a,8a anschließenden schräg auf die Mittellängsachse 27 zu verlaufenden Schrägabschnitt 28 auf. Die Schrägabschnitte 28 sind durch parallel zur Mittellängsachse 27 verlaufende Rohrabschnitte 29 miteinander verbunden. Durch diese Ausgestaltung ragen die Rohre 25 mit einem Teil ihrer Umfangsfläche in den sich zwischen den beiden Öffnungen 6a und 9a erstreckenden Zentralbereich 30 des Abgaskanals 18 hinein (siehe auch Fig.6). Das durch die Zuströmöffnung 6a in den Abgaskanal einströmende Abgas kann daher nicht auf direktem Wege zur Abströmöffnung 9a gelangen, sondern es wird durch die Schrägabschnitte 28 und auch durch die geradlinig verlaufenden Rohrabschnitte 29 abgelenkt (siehe Pfeile 31 in Fig.5), dabei verwirbelt und gezwungen, die Umfangsfläche der Rohre 25 zu umströmen, was die Kühlwirkung erhöht. Die Rohre 25 sind an den Stirnwänden 5a und 8a sowie mit Hilfe von Abstandselementen 32 (Fig.7) an der Innenseite 33 des Gehäuses 2a fixiert.

In Fig.8 ist ein Ausschnitt einer Abgasanlage mit einem Kühler 1 und einem Abgaskonverter 34 schematisch dargestellt. Der Kühler 1 entspricht im Wesentlichen dem in Fig.1 dargestellten Kühler. Sein Gehäuse 2 bzw. der von ihm umgrenzte Abgaskanal 18 ist in Längsrichtung von einem Kühlluftkanal 11 durchsetzt. Von dem zuführenden Abgasrohr 7 zweigt ein Bypassrohr 35 ab, das sich mit allseitigem Radialabstand durch den Kühlluftkanal 11 hindurcherstreckt und in das Gehäuse 36 des Abgaskonverters 34 einmündet. Im Bereich der Abzweigung des Bypassrohres 35 ist ein Ventil 37 angeordnet, mit dem das Bypassrohr 35 und das Abgasrohr 7 bzw. der Abgaskanal 18 wechselweise geöffnet und geschlossen werden können. Das Ventil 37 weist als verschließelement beispielsweise eine schwenkbar im Abgasrohr 7 gelagerte Klappe 38 auf, die an ihrer der Mündungsöffnung 39 des Bypassrohres 35 zugewandten Seite ein mit dieser Öffnung zusammenwirkendes Dichtelement 40 trägt. Wenn eine Kühlung des Abgases erwünscht ist, befindet sich die Klappe 38 in der in Fig.8 gezeigten Stellung, bei dem der den Innenquerschnitt des Abgasrohres 7 freigibt und mit ihrem Dichtelement 40 das Bypassrohr 35 verschließt. In der Kaltstartphase und im Niederlastbereich, wenn eine Kühlung nicht gewünscht ist, befindet sich die Klappe in der in Fig.9 gezeigten Stellung, in der sie den Innenquerschnitt des Abgasrohres 7 verschließt und in der das Dichtelement 40 die Mündungsöffnung des Bypassrohres 35 freigibt. Das Abgas kann nun auf kürzestem Wege und ohne nennenswerte Kühlung zum Abgaskonverter gelangen. Die Querschnittsfläche des Bypassrohres 35 ist kleiner als die Innenquerschnittsfläche des Abgasrohres 7. Dadurch wird zum einen die mit der Umgebungs- bzw. Fahrtluft in Verbindung stehende Außenfläche des Bypassrohres 35 und dessen Masse verringert. Zum anderen wird die Strömungsgeschwindigkeit des im Bypassrohr 35 strömenden Abgases erhöht, wodurch die Wärmeabgabe an die Umgebungsluft ebenfalls verringert wird. Das Bypassrohr 35 hat aufgrund seines gegenüber dem Abgaskanal 18 verringerten Querschnitts außerdem den Vorteil, dass ein von der Motorsteuerung ausgelöster _{"}Überfettungspeak" praktisch unverdünnt an einen NOₓ-Speicherkatalysator weitergeleitet wird. Der dort im unverdünnten Zustand angelangte Kraftstoffüberschuss regeneriert den Speicherkatalysator, indem er mit dem dort gespeicherten Sauerstoffes verbrannt wird.

### Bezugszeichenliste

- 1: Kühler
- 2: Gehäuse
- 3: Seitenwand
- 4: Strömungsrichtung
- 5: vordere Stirnwand
- 6: Zuströmöffnung
- 7: Abgasrohr
- 8: hintere Stirnwand
- 9: Abströmöffnung
- 10: Abgasrohr
- 11: Kühlluftkanal
- 12: Lufteinströmöffnung
- 13: Luftausströmöffnung
- 14: Wand
- 15: Mittellängsachse
- 16: Abschnitt
- 17: Abschnitt
- 18: Abgaskanal
- 19: Strömungspfeil
- 20: Querschnittsfläche
- 21: Außenseite
- 22: Innenseite
- 23: Kühlluftkanal
- 24: Kühlluftkanal
- 25: Rohr
- 26: Anschlussstutzen
- 27: Mittellängsachse
- 28: Schrägabschnitt
- 29: Rohrabschnitt
- 30: Zentralbereich
- 31: Pfeil
- 32: Abstandselement
- 33: Innenseite
- 34: Abgaskonverter
- 35: Bypassrohr
- 36: Gehäuse
- 37: Ventil
- 38: Klappe
- 39: Mündungsöffnung
- 40: Dichtelement
- 41: Klappe

## Patentansprüche

1. Abgasanlage für Kraftfahrzeuge, mit einem Abgaskonverter (34) und einem diesem vorgeschalteten Kühler (1) für das Abgas,
**dadurch gekennzeichnet,**
**dass** der Kühler (1) ein einen Abgaskanal (18) umgrenzendes, mit einer Zuström- und einer Abströmöffnung (6,9) versehenes Gehäuse (2) mit einer z.B. zylinderförmigen Seitenwand (3) aufweist, deren im Wesentlichen gesamte Innenfläche (22) eine von Abgas beaufschlagbare Kühlfläche bildet, und dass innerhalb des Abgaskanals (18) wenigstens ein das Gehäuse (2) durchsetzender Kühlluftkanal (11) angeordnet ist.

2. Abgasanlage nach Anspruch 1,
**dadurch gekennzeichnet,**
**dass** sich der Kühlluftkanal (11) im Wesentlichen in Längsrichtung des Gehäuses (2) bzw. in Strömungsrichtung (4) des Abgases erstreckt.

3. Abgasanlage nach Anspruch 1 oder 2,
**dadurch gekennzeichnet,**
**dass** die Querschnittsfläche des Abgaskanals (18) der Querschnittsfläche des zum Kühler (1) hinführenden Abgasrohres (7) entspricht.

4. Abgasanlage nach Anspruch 1, 2 oder 3,
**gekennzeichnet durch**
einen allseitigen Abstand zwischen der den Kühlluftkanal (11) umgrenzenden Wand (14) und der Innenfläche (22) der Seitenwand (3).

5. Abgasanlage nach einem der Ansprüche 1 bis 4,
**dadurch gekennzeichnet,**
**dass** der Kühlluftkanal (11) von Fahrtluft durchströmbar ist.

6. Abgasanlage nach Anspruch 5,
**dadurch gekennzeichnet,**
**dass** der Kühlluftkanal (11) eine Lufteintrittsöffnung (12) aufweist, die in der von Fahrtluft beaufschlagten vorderen Stirnseite (5) des Gehäuses (2) angeordnet ist.

7. Abgasanlage nach Anspruch 6,
**dadurch gekennzeichnet,**
**dass** die Luftaustrittsöffnung (13) des Kühlluftkanals (11) in der hinteren Stirnseite (8) des Gehäuses (2) angeordnet ist.

8. Abgasanlage nach einem der Ansprüche 2 bis 7,
**gekennzeichnet durch**
mehrere Kühlluftkanäle (23,24) mit jeweils einer Lufteintrittsöffnung (12a) in der vorderen Stirnwand (5a) und jeweils einer Luftaustrittsöffnung (13a) in der hinteren Stirnwand (8a).

9. Abgasanlage nach einem der Ansprüche 1 bis 8,
**dadurch gekennzeichnet,**
**dass** an dem Wärmeübergang zwischen Abgas und Kühl- bzw. Umgebungsluft beteiligte Wände des Kühlers (1) mit oberflächenvergrößernden Strukturen versehen sind.

10. Abgasanlage nach einem der Ansprüche 1 bis 9,
**dadurch gekennzeichnet,**
**dass** an dem Wärmeübergang zwischen Abgas und Kühl- bzw. Umgebungsluft beteiligte Wände des Kühlers (1) schwarze Oberflächen aufweisen.

11. Abgasanlage nach einem der Ansprüche 1 bis 10,
**gekennzeichnet durch**
einen verschließbaren Kühlluftkanal (11).

12. Abgasanlage nach einem der Ansprüche 1 bis 11,
**gekennzeichnet durch**
ein von der Eingangsseite des Kühlers (1) abzweigendes und in einen nachgeschalteten Abgaskonverter (34) mündendes Bypassrohr (35) und ein den Öffnungszustand des Abgaskanals (18) und des Bypassrohrs (35) steuerndes Ventil (37), dass wechselweise den Abgaskanal (18) sperrt und das Bypassrohr (35) freigibt.

13. Abgasanlage nach Anspruch 12,
**dadurch gekennzeichnet,**
**dass** sich das Bypassrohr (35) durch den Kühlkanal (18) des Kühlers (1) hindurcherstreckt.

## Claims

1. Exhaust system for motor vehicles, having an exhaust converter (34) and a cooler (1) which is connected upstream of the latter and is intended for the exhaust gas, **characterized in that** the cooler (1) has a housing (2) which bounds an exhaust duct (18), is provided with an inflow opening and an outflow opening (6, 9) and has a side wall (3) which is, for example, cylindrical and essentially the entire inner surface (22) of which forms a cooling surface which can be acted upon by exhaust gas, and **in that** at least one cooling-air duct (11) which passes through the housing (2) is arranged within the exhaust duct (18).

2. Exhaust system according to Claim 1, **characterized in that** the cooling-air duct (11) extends essentially in the longitudinal direction of the housing (2) and in the flow direction (4) of the exhaust gas.

3. Exhaust system according to Claim 1 or 2, **characterized in that** the cross-sectional surface of the exhaust duct (18) corresponds to the cross-sectional surface of the exhaust pipe (7) leading to the cooler (1).

4. Exhaust system according to Claim 1, 2 or 3, **characterized by** a distance on all sides between the wall (14) bounding the cooling-air duct (11) and the inner surface (22) of the side wall (3).

5. Exhaust system according to one of Claims 1 to 4, **characterized in that** motion air can flow through the cooling-air duct (11).

6. Exhaust system according to Claim 5, **characterized in that** the cooling-air duct (11) has an air inlet opening (12) which is arranged in the front end side (5) of the housing (2), which side is acted upon by motion air.

7. Exhaust system according to Claim 6, **characterized in that** the air outlet opening (13) of the cooling-air duct (11) is arranged in the rear end side (8) of the housing (2).

8. Exhaust system according to one of Claims 2 to 7, **characterized by** a plurality of cooling-air ducts (23, 24) with a respective air inlet opening (12a) in the front end wall (5a) and a respective air outlet opening (13a) in the rear end wall (8a).

9. Exhaust system according to one of Claims 1 to 8, **characterized in that** walls of the cooler (1) which are involved in the transfer of heat between the exhaust gas and cooling air or ambient air are provided with surface-enlarging structures.

10. Exhaust system according to one of Claims 1 to 9, **characterized in that** walls of the cooler (1) which are involved in the transfer of heat between the exhaust gas and cooling air or ambient air have black surfaces.

11. Exhaust system according to one of Claims 1 to 10, **characterized by** a closable cooling-air duct (11).

12. Exhaust system according to one of Claims 1 to 11, **characterized by** a bypass pipe (35) which branches off from the input side of the cooler (1) and leads into an exhaust converter (34) connected downstream, and by a valve (37) which controls the opening state of the exhaust duct (18) and of the bypass pipe (35) and alternately blocks the exhaust duct (18) and opens up the bypass pipe (35).

13. Exhaust system according to Claim 12, **characterized in that** the bypass pipe (35) extends through the cooling duct (18) of the cooler (1).

## Revendications

1. Dispositif pour des gaz d'échappement de véhicules automobiles, comprenant un convertisseur (34) de gaz d'échappement et un dispositif (1) de refroidissement des gaz d'échappement monté en amont de celui-ci,
**caractérisé en ce que**,
le dispositif (1) de refroidissement a une enveloppe (2) délimitant un canal (18) pour des gaz d'échappement, muni d'une ouverture (6) d'entrée et d'une ouverture (9) de sortie et ayant une paroi (3) latérale, par exemple de forme cylindrique, dont sensiblement toute la surface (22) intérieure forme une surface de refroidissement pouvant être exposée à des gaz d'échappement, et **en ce que** à l'intérieur du canal (18) pour des gaz d'échappement est disposé au moins un canal (11 ) pour de l'air de refroidissement traversant l'enveloppe (2).

2. Dispositif pour des gaz d'échappement suivant la revendication 1,
**caractérisé,**
**en ce que** le canal (11) pour de l'air de refroidissement s'étend sensiblement dans la direction longitudinale de l'enveloppe (2) ou dans le sens (4) de passage des gaz d'échappement.

3. Dispositif pour des gaz d'échappement suivant la revendication 1 ou 2, **caractérisé en ce que** la surface de la section transversale du canal (18) pour les gaz d'échappement correspond à la surface de la section transversale du tuyau (7) pour les gaz d'échappement menant au dispositif (1) de refroidissement.

4. Dispositif pour des gaz d'échappement suivant la revendication 1, 2 ou 3, **caractérisé par** une distance de tout côté entre la paroi (14) délimitant le canal (11) pour de l'air de refroidissement et la surface (22) intérieure de la paroi (3) latérale.

5. Dispositif pour des gaz d'échappement suivant la revendication 1 à 4, **caractérisé en ce que** le canal (11) pour de l'air de refroidissement peut être parcouru par de l'air de marche.

6. Dispositif pour des gaz d'échappement suivant la revendication 5, **caractérisé en ce que** le canal (11) pour de l'air de refroidissement a une ouverture (12) d'entrée d'air, qui est disposée dans le côté (5) avant de l'enveloppe (2) qui est exposé à l'air de marche.

7. Dispositif pour des gaz d'échappement suivant la revendication 6, **caractérisé en ce que** l'ouverture (13) de sortie de l'air du canal (11) pour de l'air de refroidissement est disposée dans le côté (8) frontal arrière de l'enveloppe (2).

8. Dispositif pour des gaz d'échappement suivant l'une des revendications 1 à 7, **caractérisé par** plusieurs canaux (23, 24) pour de l'air de refroidissement ayant respectivement une ouverture (12a) d'entrée de l'air dans la paroi (5a) frontale avant et respectivement une ouverture (13a) de sortie de l'air dans la partie (8a) frontal arrière.

9. Dispositif pour des gaz d'échappement suivant l'une des revendications 1 à 8, **caractérisé en ce que** des parois du dispositif (1) de refroidissement participant au transfert de chaleur entre les gaz d'échappement et l'air de refroidissement ou l'air ambiant sont munies de structures en agrandissant la surface.

10. Dispositif pour des gaz d'échappement suivant l'une des revendications 1 à 9, **caractérisé en ce que** des parois du dispositif (1) de refroidissement participant au transfert de chaleur entre les gaz d'échappement et l'air de refroidissement ou l'air ambiant ont des surfaces noires.

11. Dispositif pour des gaz d'échappement suivant l'une des revendications 1 à 10, **caractérisé par** un canal (11) pour de l'air de refroidissement qui peut être fermé.

12. Dispositif pour des gaz d'échappement suivant l'une des revendications 1 à 11, **caractérisé par** un tuyau (35) de dérivation bifurquant du côté de l'entrée du dispositif (1) de refroidissement et débouchant dans un convertisseur (34) en aval pour les gaz d'échappement et par une vanne (37) commandant l'état d'ouverture du canal (18) pour les gaz d'échappement et du tuyau (35) de dérivation, qui en alternance ferme le canal (18) pour les gaz d'échappement et dégage le tuyau (35) de dérivation.

13. Dispositif pour des gaz d'échappement suivant la revendication 12, **caractérisé en ce que** le tuyau (35) de dérivation s'étend à travers le canal (18) de refroidissement du dispositif (1) de refroidissement.
